(19) Europäisches Patentamt
European Patent Office
Office européen des brevets

(11) Veröffentlichungsnummer: **0 372 414 B1**

(12) **EUROPÄISCHE PATENTSCHRIFT**

(45) Veröffentlichungstag der Patentschrift: **28.06.95**

(51) Int. Cl.[6]: **C07F 17/00**, C08F 10/00, C08F 4/642, C08G 77/58

(21) Anmeldenummer: **89122199.6**

(22) Anmeldetag: **01.12.89**

Teilanmeldung 94118930.0 eingereicht am 01/12/89.

(54) **Verfahren zur Herstellung einer heterogenen Metallocenkatalysatorkomponente.**

(30) Priorität: **03.12.88 DE 3840772**

(43) Veröffentlichungstag der Anmeldung: **13.06.90 Patentblatt 90/24**

(45) Bekanntmachung des Hinweises auf die Patenterteilung: **28.06.95 Patentblatt 95/26**

(84) Benannte Vertragsstaaten: **BE DE ES FR GB IT NL**

(56) Entgegenhaltungen:
**EP-A- 0 171 307**
**EP-A- 0 206 794**
**US-A- 4 292 253**

**JOURNAL OF ORGANOMETALLIC CHEMISTRY, Band 125, 1977, Seiten 57-62, Elsevier-Sequoia S.A., Lausanne, CH; R. JACKSON et al.: "Silica-supported analogues of titanocene"**

(73) Patentinhaber: **HOECHST AKTIENGESELLSCHAFT**

**D-65926 Frankfurt (DE)**

(72) Erfinder: **Antberg, Martin, Dr.**
**Sachsenring 10**
**D-6238 Hofheim am Taunus (DE)**
Erfinder: **Böhm, Ludwig, Dr.**
**Leonhardstrasse 36**
**D-6234 Hattersheim am Main (DE)**
Erfinder: **Rohrmann, Jürgen, Dr.**
**Die Ritterwiesen 10**
**D-6237 Liederbach (DE)**

**EP 0 372 414 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf ein Verfahren zur Herstellung von heterogenen Metallocenkatalysatorkomponenten unter Verwendung von Poly(methylhydrogensiloxan).

Metallocene von Übergangsmetallen sind als Katalysatorkomponenten bekannt (vgl. US 4 522 982, US 4 542 199, EP 128045). Zusammen mit Aluminoxanen bilden sie homogene Übergangsmetall-Katalysatoren, welche in aromatischen und aliphatischen Kohlenwasserstoffen löslich sind. Diese Katalysatoren sind sehr aktiv. Lösliche Katalysatoren sind nachteilig, wenn sie in bestehenden technischen Anlagen eingesetzt werden sollen, da diese in der Regel für die Verwendung von heterogenen Katalysatorsystemen eingerichtet sind. Es war daher wünschenswert, Metallocen-Katalysatoren zu finden, welche als unlösliche Feststoffe in Form einer Suspension verwendet werden können.

In EP-A-256 981 sind Titanocene mit silylierten TC-Cyclopentadienliganden beschrieben, die sich als Photoinitiatoren eignen.

Bekannt sind Metallocen-Katalysatoren, bei welchen eine Zirkonocen- oder Titanocenkomponente und ein Aluminoxan gemeinsam aus einer Lösung auf einen silikatischen Träger aufgebracht werden (vgl. EP 206 794). Dieses Katalysatorsystem ist indessen wenig aktiv. Außerdem sind die Katalysatorkomponenten nicht ausreichend fest auf dem Träger verankert und können somit während der Polymerisation extrahiert werden.

Außerdem ist bekannt, daß Silyletherreste enthaltende Metallocenverbindungen unter Bildung von Siloxanbrücken auf silikatische Träger aufgebracht werden können (vgl. DE 37 18 888). Dafür ist es notwendig, dem Trägermaterial durch mehrstündiges Trocknen bei einer Temperatur von maximal 800 °C adsorptiv gebundenes Wasser zu entziehen. Somit wird ein bestimmter Hydroxylgruppengehalt eingestellt, welcher analytisch mit n-Butylmagnesiumchlorid bestimmt wird. Der so konditionierte Träger muß unter Luft- und Wasserausschluß unter Inertgas gelagert werden.

Es wurde nun gefunden, daß die oben genannten Nachteile vermieden werden könnnen, wenn man eine geeignet substituierte Metallocenverbindung unter Hydrosilylierungskatalyse mit einem Poly(methylhydrogensiloxan) umsetzt.

Die Erfindung betrifft somit das in den Ansprüchen beschriebene Verfahren.

Zur Herstellung der erfindungsgemäßen heterogenen Metallocenkatalysatorkomponente werden Verbindungen der Formel I

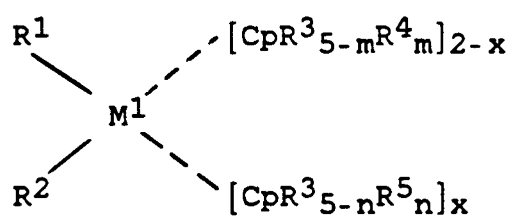

(I)

oder der Formel II

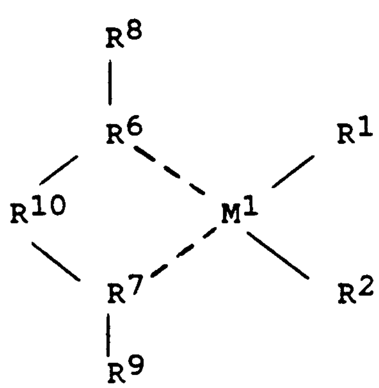

(II)

verwendet,
worin

$M^1$ Titan, Zirkonium oder Hafnium, vorzugsweise Zirkonium ist und

Cp einen Cyclopentadienylrest bedeutet.

$R^1$ und $R^2$ sind gleich oder verschieden und bedeuten ein Wasserstoffatom, ein Halogenatom, eine $C_1$-$C_{10}$-Alkylgruppe, eine $C_1$-$C_{10}$-Alkoxygruppe, eine $C_7$-$C_{20}$-Arylalkylgruppe, eine $C_6$-$C_{10}$-Arylgruppe, eine $C_6$-$C_{10}$-Aryloxygruppe, vorzugsweise eine Alkylgruppe oder ein Halogenatom, insbesondere ein Chloratom. $R^1$ und $R^2$ können auch miteinander verknüpft sein und mit $M^1$ einen Metallocyclus bilden.

$R^3$ bedeutet ein Wasserstoffatom, ein Halogenatom, eine $C_1$-$C_{10}$-Alkylgruppe, eine $C_6$-$C_{10}$-Arylgruppe, eine $C_7$-$C_{20}$-Arylalkylgruppe, eine $C_1$-$C_{10}$-Fluoralkylgruppe oder einen Organometallrest wie $C_1$-$C_{10}$-Trialkylsilyl, $C_6$-$C_{10}$-Aryl-$C_1$-$C_{10}$-dialkylsilyl, $C_1$-$C_{10}$-Alkyl-$C_6$-$C_{10}$-diarylsilyl oder $C_6$-$C_{10}$-Triarylsilyl. $R^3$ ist vorzugsweise ein Wasserstoffatom oder eine Methylgruppe, insbesondere ein Wasserstoffatom.

$R^4$ und $R^5$ sind gleich oder verschieden und bedeuten eine $C_2$-$C_{10}$-Alkenylgruppe, eine $C_8$-$C_{12}$-Alkenylarylgruppe, eine $C_2$-$C_{10}$-Alkenoxygruppe, eine $C_2$-$C_8$-Alkenyl-$C_1$-$C_8$ dialkylsilylgruppe, eine $C_2$-$C_8$-Alkenyl-$C_6$-$C_{10}$-diarylsilylgruppe oder eine $C_2$-$C_8$-Alkenyl-$C_1$-$C_8$-alkyl-$C_6$-$C_{10}$-arylsilylgruppe. $R^4$ und $R^5$ sind vorzugsweise eine $C_2$-$C_{10}$-Alkenylgruppe oder eine $C_2$-$C_8$-Alkenyl-$C_1$-$C_8$-dialkylsilylgruppe.

$R^6$ und $R^7$ sind gleich oder verschieden und bedeuten einen Cyclopentadienyl-, Indenyl- oder Fluorenylrest, wobei die genannten Fünfringe mit $M^1$ eine Sandwichstruktur bilden können. $R^6$ und $R^7$ sind vorzugsweise Indenylreste.

$R^8$ und $R^9$ sind gleich oder verschieden, bedeuten Substituenten der genannten Fünfringe $R^6$ und $R^7$ in 3-Stellung und sind eine $C_2$-$C_{10}$-Alkenylgruppe oder ein Organometallrest wie beispielsweise eine $C_2$-$C_{10}$-Alkenyl-$C_1$-$C_{10}$-dialkylsilylgruppe, eine $C_1$-$C_{10}$-Alkyl-$C_2$-$C_{10}$-dialkenylsilylgruppe, eine $C_2$-$C_{10}$-Alkenyl-$C_6$-$C_{10}$-diarylsilylgruppe oder eine $C_6$-$C_{10}$ Aryl-$C_2$-$C_{10}$-dialkenylsilylgruppe, bevorzugt sind eine Alkenyl- oder Alkenyldialkylsilylgruppe, insbesondere eine Butenyl-oder Alkyldimethylsilylgruppe.

$R^{10}$ hat die in den Formeln III-VII dargestellte Bedeutung

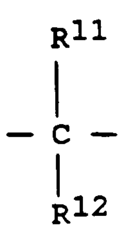 (III)

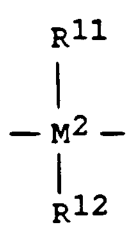 (IV)

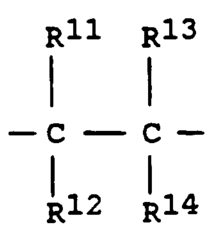 (V)

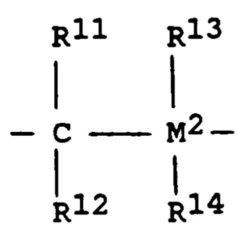 (VI)

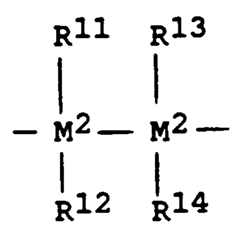 (VII),

wobei

$M^2$ Silizium, Germanium oder Zinn, vorzugsweise Silizium ist und

$R^{11}$,$R^{12}$,$R^{13}$ und $R^{14}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_6$-$C_{10}$-Aryloxygruppe oder eine $C_7$-$C_{20}$-Arylalkylgruppe bedeuten, vorzugsweise eine Dialkylsilyl- und eine 1,2-Alkandiylgruppe, insbesondere eine Dimethylsilylgruppe oder 1,2-Ethandiylgruppe bedeuten.

$R^{11}$ und $R^{12}$ oder $R^{13}$ und $R^{14}$ können unter Bildung spirocyclischer Systeme wie

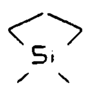

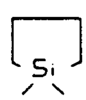

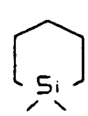

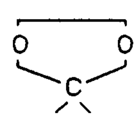

miteinander verknüpft sein, ebenso wie $R^{11}$ und $R^{13}$ oder $R^{12}$ und $R^{14}$ folgendes Ringsystem

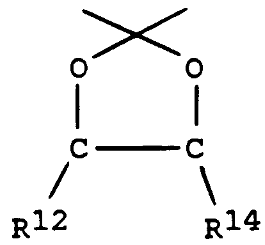

ausbilden können.

x ist null oder 1, vorzugsweise null.

m und n sind gleich oder verschieden und bedeuten eine Zahl von null bis 5, vorzugsweise 1 bis 3, insbesondere 1.

Beispiele für geeignete Metallocenverbindungen der Formel I sind

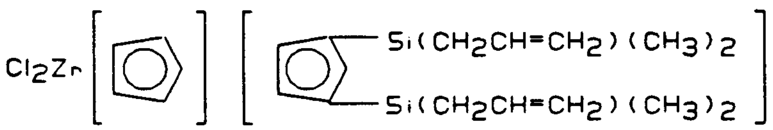

(I-1)

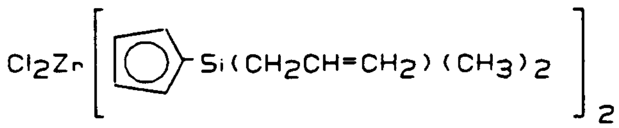

(I-2)

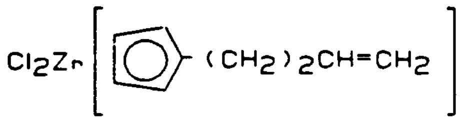

(I-3)

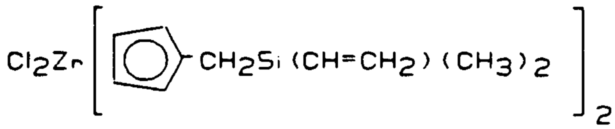

(I-4)

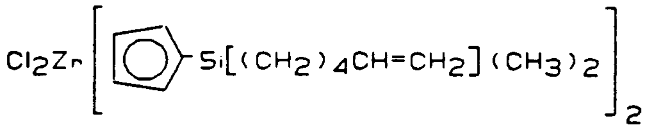

(I-5)

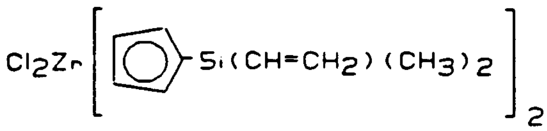

(I-6)

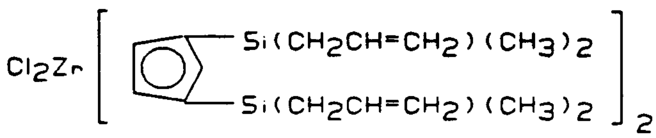

(I-7)

Beispiele für geeignete Metallocenverbindungen der Formel II sind

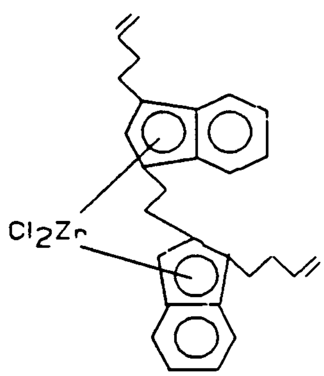

(II-1)

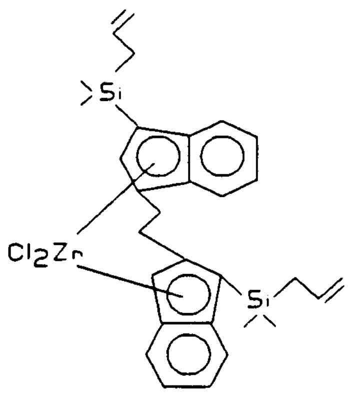

(II-2)

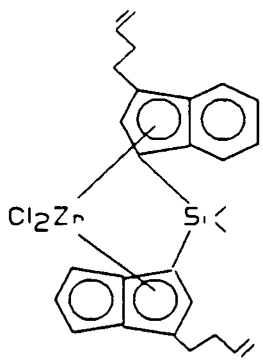

(II-3).

Die Metallocene enthalten mindestens zwei olefinische Funktionen, welche in einer Hydrosilylierungsreaktion, katalysiert mit einer Verbindung der 8. Nebengruppe des Periodensystems der Elemente, beispielsweise Osmium, Iridium und Platin, vorzugsweise mit Platin, insbesondere mit Hexachloroplatinsäurehexahydrat, mit einem Poly(methylhydrogensiloxan), beispielsweise $(CH_3)_3SiO[Si(CH_3)HO]_{35}Si(CH_3)_3$, zu einem heterogenen Polymerisationskontakt nach folgendem Schema weiterreagieren:

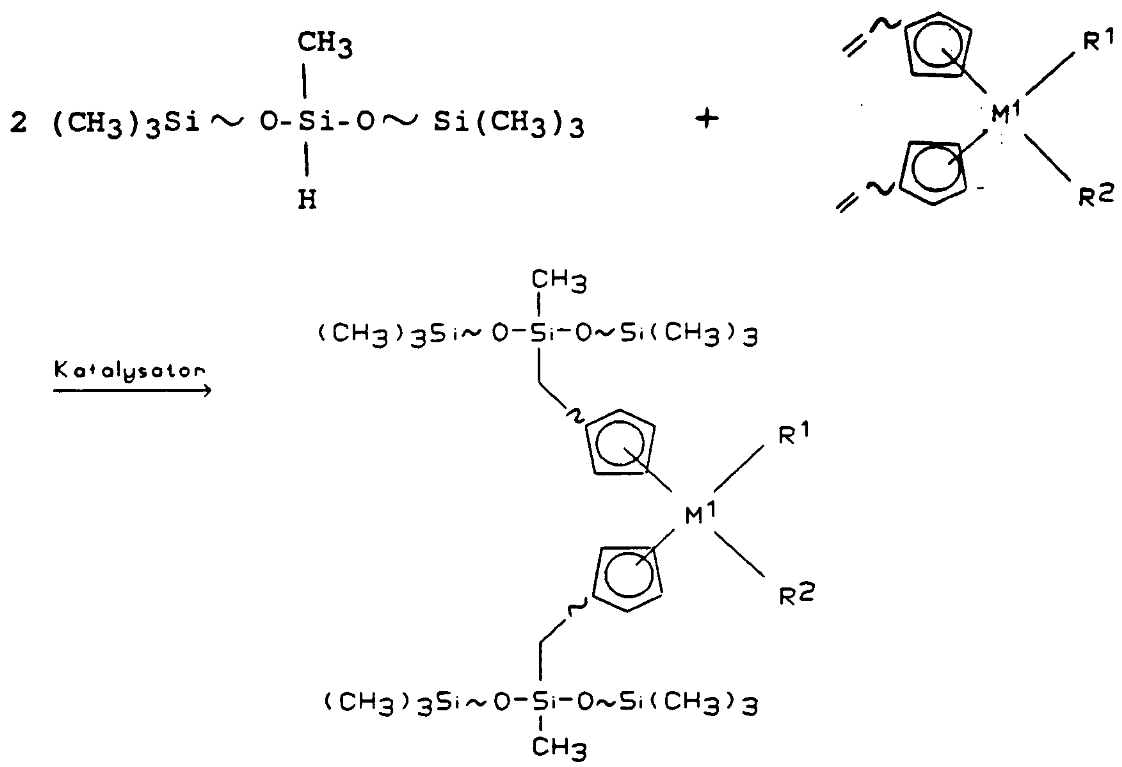


Zur Heterogenisierung wird das Metallocen in einem Lösemittel, beispielsweise einem aliphatischen oder cycloaliphatischen Kohlenwasserstoff, beispielsweise Pentan oder Cyclohexan oder in einem aromatischen Kohlenwasserstoff, beispielsweise Toluol oder Xylol, oder in einem Ether, beispielsweise Diethylether, gelöst, das Poly(methylhydrogensiloxan) und der Hydrosilylierungskatalysator hinzugegeben und das Gemisch 5 bis 120 min, vorzugsweise 10 bis 30 min auf 20 bis 90 °C, vorzugsweise 30 bis 80 °C erwärmt. Daraufhin bildet sich ein grauer Niederschlag, der abfiltriert, gewaschen und getrocknet wird.
Der Reaktionsverlauf läßt sich IR-sprektroskopisch aufgrund der C=C- und Si-H-Schwingungsbande verfolgen.
Der erfindungsgemäß erhaltene Heterogenkontakt kann zur Polymerisation von 1-Olefinen der Formel

$R^{15}$-CH = $CH_2$,

worin

$R^{15}$ Wasserstoff, eine geradkettige oder verzweigte Alkylgruppe, beispielsweise Ethylen, Propylen oder 4-Methylpenten (1) bedeutet, verwendet werden.

Außerdem kann der Kontakt auch zur Polymerisation von cyclischen Olefinen, wie beispielsweise Cyclopenten, Cyclohexen, Norbornen, Diolefinen und cyclischen Diolefinen eingesetzt werden.

Dabei wird zur Polymerisation neben dem Metallocen ein Aluminoxan als Cokatalysator, dessen Synthese bekannt ist, verwendet.

Anhand der folgenden Beispiele soll die Erfindung erläutert werden.

**Beispiel 1**

Zu 1,3 g (32,41 mmol) Kaliumhydrid in 20 $cm^3$ THF wurden bei Zimmertemperatur 2,89 g (24,04 mmol) $C_5H_4$-$(CH_2)_2$CH = $CH_2$ in 50 $cm^3$ THF gelöst, innerhalb von 3 h zugetropft und der Ansatz anschließend über Nacht gerührt. Unumgesetztes Kaliumhydrid wurde abfiltriert, mit kleinen Portionen Ether gewaschen, im Vakuum getrocknet und ausgewogen. Es waren 0,78 g (19,45 mmol).

12,96 mmol $K^+[C_5H_4$-$(CH_2)_2CH = CH_2]^-$ waren entstanden.

Die abfiltrierte Cyclopentadienid-Lösung wurde innerhalb von 1,5 h zu einer Suspension von 2,46 g (6,52 mmol) $Cl_4Zr(THF)_2$ in 20 $cm^3$ THF bei -10 °C zugetropft. Nach 4 h Rühren bei Zimmertemperatur wurde der Ansatz filtriert, das Filtrat eingedampft und der Rückstand mit einem Kohlenwasserstoff extrahiert. Nach Einengen der vereinigten Extrakte wurde der bei -40 °C gebildete Niederschlag abgetrennt und

im Vakuum getrocknet.
Ausbeute: 1,5 g (3,75 mmol ≙ 57 %)
$Cl_2Zr[C_5H_4\text{-}(CH_2)_2CH=CH_2]_2$
Die Verbindung zeigte ein der Erwartung entsprechendes $^1$H-NMR-Spektrum und eine korrekte Elementaranalyse.

**Beispiel 2**

Es wurde analog Beispiel 1 gearbeitet, jedoch wurden in Abänderung 0,87 g (21,69 mmol) Kaliumhydrid und 3,56 g (21,67 mmol) $C_5H_4\text{-}Si(CH_3)_2CH_2CH=CH_2$ eingesetzt. Der Umsatz von Kaliumhydrid war vollständig und die Menge $Cl_4Zr\ (THF)_2$ betrug 4,08 g (10,82 mmol).
Ausbeute: 2,44 g (4,99 mmol ≙ (46 %)
$Cl_2Zr[C_5H_4\text{-}Si(CH_3)_2CH_2CH=CH_2]_2$
Die Elementaranalyse und das $^1$H-NMR-Spektrum entsprachen den Erwartungen.

**Beispiel 3**

Es wurden 10,16 g (22,35 mmol) 1,2-[1,1'Bis(3-allyldimethylsilylindenyl)ethan in 100 $cm^3$ THF gelöst und 27,95 $cm^3$ einer 1,6-n-Butyllithium-Hexan-Lösung (44,72 mmol) bei Zimmertemperatur innerhalb von 2 h zugetropft. Nach 4 h Rühren bei ca. 60 °C wurde der Ansatz eingedampft, der Rückstand in einem Kohlenwasserstoff suspendiert, filtriert, gewaschen, getrocknet und ausgewogen. Es waren 9,39 g (20,12 mmol≙94 %) Dilithiumsalz entstanden.
Das Dilithiumsalz wurde in 100 $cm^3$ Toluol suspendiert und bei Zimmertemperatur innerhalb 2 h 8,2 g (21,74 mmol) $Cl_4Zr$ (THF)2 in 100 $cm^3$ THF zugegeben. Nach Rühren über Nacht wurde der Ansatz eingedampft, der Rückstand mit einem Kohlenwasserstoff extrahiert, filtriert und die vereinigten Filtrate eingedampft.
Ausbeute: 5 g (8,13 mmol ≙ 40 %)
Ethylen-bis[1-(3-allyldimethylsilylindenyl)zirkoniumdichlorid.

Die Verbindung zeigte eine korrekte Elementaranalyse.

**Beispiel 4**

0,98 g (2 mmol) der Verbindung mit der Formel I-2 wurden in 12 $cm^3$ Toluol gelöst, 0,52 g (0,23 mmol) Poly(methylhydrogensiloxan) und 0,02 g $H_2PtCl_6 \cdot 6H_2O$ hinzugefügt. Nach wenigen Minuten Erwärmung der Mischung bildete sich eine dunkelgraue, feste Phase. Die überstehende Lösung zeigte im IR-Spektrum keine Si-H-Schwingungsbande mehr. Daher wurde der Niederschlag abgetrennt, gründlich mit Toluol gewaschen, um eventuell unumgesetzten, adsorptiv gebundenen Komplex zu entfernen. Anschließend wurde das Produkt im Vakuum getrocknet. Der elementaranalytisch untersuchte Rückstand enthielt 10,2 % Zr.

**Beispiel 5**

Es wurde analog Beispiel 4 gearbeitet, jedoch wurden in Abänderung 0,83 g (1,70 mmol) der Verbindung mit der Formel I-2, 0,45 g (0,20 mmol) Poly(methylhydrogensiloxan) und 0,21 g $H_2PtCl_6 \cdot 6H_2O$ eingesetzt. Der elementaranalytisch untersuchte Rückstand enthielt 8,4 % Zr.

**Beispiel 6**

Es wurde analog Beispiel 4 gearbeitet, jedoch wurden in Abänderung 1,2 g (3 mmol) der Verbindung mit der Formel I-3, 0,74 g (0,33 mmol) Poly(methylhydrogensiloxan) und 0,15 g $H_2PtCl_6 \cdot 6H_2O$ eingesetzt. Der elementaranalytisch untersuchte Rückstand enthielt 9,3 % Zr.

**Beispiel 7**

In einem 1,5 $dm^3$ Stahlautoklav wurden 900 $cm^3$ einer Dieselölfraktion (Kp = 100-120 °C) vorgelegt und auf 70 °C aufgeheizt. Der Reaktor wurde mit einer toluolischen Lösung von 0,25 g Methylaluminoxan und 0,01 mmol des heterogenen Kontaktes aus Beispiel 4 beschickt. Dann wurde Ethylen bis zu einem Enddruck von 7 bar aufgepreßt und 2 h polymerisiert. Die Katalysatorreste in der Suspenision wurden mit

wässriger HCl zersetzt. Das Polymere wurde isoliert, mit Aceton gewaschen und getrocknet. Man erhielt 5,1 g Polyethylen. Dies entspricht einer Aktivität von 255 g Polymer/mmol Zr•h (weitere Daten in der Tabelle).

**Bespiel 8**

In einem 1,5 $dm^3$ Stahlautoklav wurden 600 $cm^3$ einer Dieselölfraktion (Kp = 100-120 °C) und 300 $cm^3$ Cyclopenten vorgelegt und auf 60 °C aufgeheizt. Der Reaktor wurde mit einer toluolischen Lösung von 0,25 g Methylaluminoxan und 0,01 mmol des heterogenen Kontaktes aus Beispiel 4 beschickt. Nach Aufpressen von Ethylen bis 7 bar wurde der Ansatz 2 h polymerisiert. Die Polymer-Lösung wurde in die doppelte Menge einer Methanol/Aceton-Mischung gegeben. Das ausgefallene Ethylen-Cyclopenten-Copolymer wurde isoliert und getrocknet. Die Ausbeute betrug 4,2 g, entsprechend einer Aktivität von 210 g Polymer/mmol Zr•h (weitere Daten in der Tabelle).

**Bespiel 9**

In einem 1,5 $dm^3$ Stahlautoklav wurden 900 $cm^3$ Cyclopenten vorgelegt und mit 0,25 g Methylaluminoxan und 0,01 mmol des heterogenen Kontaktes aus Beispiel 4 beschickt. Nach 2-stündiger Polymerisation des Ansatzes bei 60 °C wurde die Polymer-Lösung wie in Beispiel 8 aufgearbeitet. Die Ausbeute an Polymer betrug 1,6 g, entsprechend einer Aktivität von 80 g Polymer/mmol Zr•h (weitere Daten in der Tabelle).

Beispiele 10 und 11 wurden entsprechend den Angaben in der Tabelle durchgeführt.

**Tabelle: Polymerisationsdaten der Beispiele 7-11**

| Bsp. | Monomere | Katalysator/ Cokatalysator | Polymerisation nach Beispiel | Temp. °C | Ausbeute g | VZ $cm^3/g$ | $M_w/M_n$ | Einbaurate Gew.-% |
|---|---|---|---|---|---|---|---|---|
| 7 | Ethylen | 0,01 mmol aus Bsp.4/ 0,25 g MAO | 7 | 70 | 5,1 | 831 | - | - |
| 8 | Ethylen/ Cyclopenten | 0,01 mmol aus Bsp.4/ 0,25 g MAO | 8 | 60 | 4,2 | 150 | 3,3 | 15 % |
| 9 | Cyclopenten | 0,01 mmol aus Bsp.6/ 0,25 g MAO | 9 | 60 | 1,6 | 60 | 3,2 | - |
| 10 | Cycloocten | 0,01 mmol aus Bsp.4/ 0,25 g MAO | 9 | 60 | 1,2 | 20 | 3,5 | - |
| 11 | Ethylen/ Cyclohepten | 0,01 mmol aus Bsp.6/ 0,25 g MAO | 8 | 60 | 3,8 | 120 | 3,6 | 11 % |

MAO = Methylaluminoxan

## Patentansprüche

**1.** Verfahren zur Herstellung einer heterogenen Metallocenkatalysatorkomponente aus einem Metallocen der Formel I

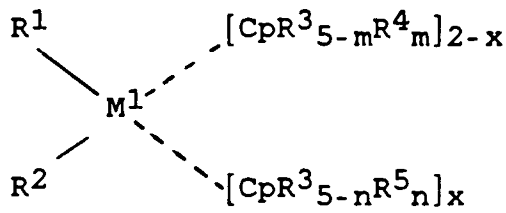

(I)

oder der Formel II

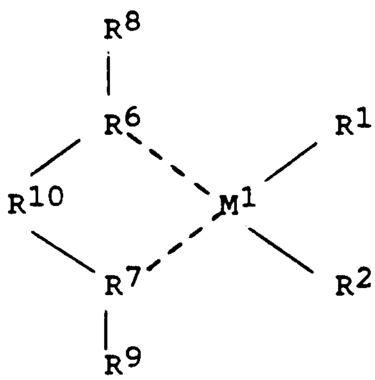

(II),

worin

$M^1$ Titan, Zirkonium oder Hafnium ist und
Cp einen Cyclopentadienylrest bedeutet,
$R^1$ und $R^2$ gleich oder verschieden sind und ein Wasserstoffatom, ein Halogenatom, eine $C_1$-$C_{10}$-Alkylgruppe, eine $C_1$-$C_{10}$-Alkoxygruppe, eine $C_7$-$C_{20}$-Arylalkylgruppe, eine $C_6$-$C_{10}$-Arylgruppe oder eine $C_6$-$C_{10}$-Aryloxygruppe bedeuten,
$R^1$ und $R^2$ auch miteinander verknüpft sein können und mit $M^1$ einen Metallocyclus bilden können,
$R^3$ ein Wasserstoffatom, ein Halogenatom, eine $C_1$-$C_{10}$-Alkylgruppe, eine $C_6$-$C_{10}$-Arylgruppe, eine $C_7$-$C_{20}$-Arylalkylgruppe, eine $C_1$-$C_{10}$-Fluoralkylgruppe oder einen Organometallrest wie $C_1$-$C_{10}$-Trialkylsilyl, $C_6$-$C_{10}$-Aryl-$C_1$-$C_{10}$-dialkylsilyl, $C_1$-$C_{10}$-Alkyl-$C_6$-$C_{10}$-diarylsilyl oder $C_6$-$C_{10}$-Triarylsilyl bedeutet,
$R^4$ und $R^5$ gleich oder verschieden sind und eine $C_2$-$C_{10}$-Alkenylgruppe, eine $C_2$-$C_{12}$-Alkenylarylgruppe, eine $C_2$-$C_{10}$-Alkenoxygruppe, eine $C_2$-$C_8$-Alkenyl-$C_1$-$C_8$-dialkylsilylgruppe, eine $C_2$-$C_8$-Alkenyl-$C_6$-$C_{10}$-diarylsilylgruppe oder eine $C_2$-$C_8$-Alkenyl-$C_1$-$C_8$-alkyl-$C_6$-$C_{10}$-arylsilylgruppe bedeuten,
$R^6$ und $R^7$ gleich oder verschieden sind und einen Cyclopentadienyl-, Indenyl- oder Fluorenylrest bedeuten, wobei die genannten Fünfringe mit $M^1$ eine Sandwichstruktur bilden können,
$R^8$ und $R^9$ gleich oder verschieden sind, Substituenten der genannten Fünfringe $R^6$ und $R^7$ in 3-Stellung sind und $C_2$-$C_{10}$-Alkenylgruppen oder Organometallreste bedeuten,
$R^{10}$ die in den Formeln III-VII dargestellte Bedeutung hat

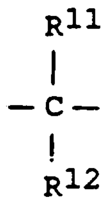 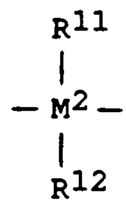 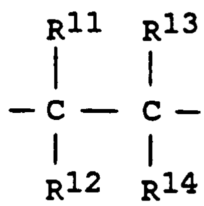 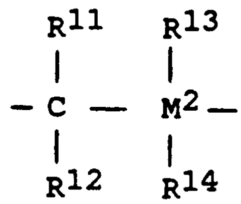 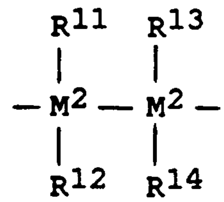

(III) (IV) (V) (VI) (VII),

wobei

| | |
|---|---|
| $M^2$ | Silizium, Germanium oder Zinn ist und |
| $R^{11}$,$R^{12}$,$R^{13}$ und $R^{14}$ | gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_6$-$C_{10}$-Aryloxygruppe oder eine $C_7$-$C_{20}$-Arylalkylgruppe bedeuten, $R^{11}$ und $R^{12}$, $R^{13}$ und $R^{14}$, $R^{11}$ und $R^{13}$ oder $R^{12}$ und $R^{14}$ mit den sie verbindenden Atomen ein Ringsystem ausbilden können, |
| x | null oder 1 ist, |
| m und n | gleich oder verschieden sind und eine Zahl von null bis 5 bedeuten, |

und einem Poly(methylhydrogensiloxan), dadurch gekennzeichnet, daß das Verfahren mit einem Hydrosilylierungskatalysator bei einer Temperatur von 20-90 °C und innerhalb von 5-120 min durchgeführt wird.

2. Verfahren gemäß Anspruch 1, dadurch gekennzeichnet, daß der Katalysator eine Verbindung der 8. Nebengruppe des Periodensystems der Elemente ist.

3. Verfahren gemäß Anspruch 1, dadurch gekennzeichnet, daß der Katalysator $H_2PtCl_6 \cdot 6H_2O$ ist.

4. Verwendung der nach Anspruch 1 hergestellten heterogenen Metallocenkatalysatorkomponente zusammen mit einem Aluminoxan zur Polymerisation von 1-Olefinen der Formel

$R^{15}$-CH = $CH_2$,

worin

$R^{15}$ ein Wasserstoffatom, eine geradkettige oder verzweigte Alkylgruppe bedeutet,

und zur Polymerisation von cyclischen Olefinen, Diolefinen und von cyclischen Diolefinen.

## Claims

1. A process for the preparation of a heterogeneous metallocene catalyst component from a metallocene of the formula I

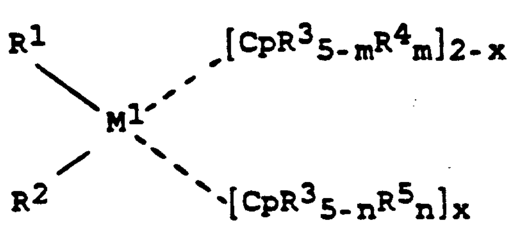

(I)

or of the formula II

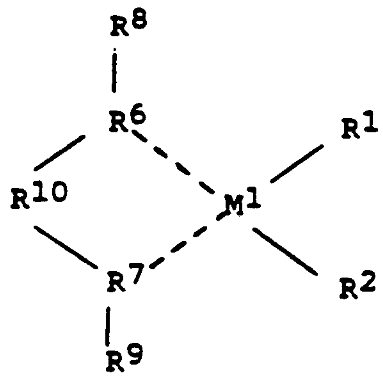

(II)

in which

$M^1$ is titanium, zirconium or hafnium and

Cp denotes a cyclopentadienyl radical,

$R^1$ and $R^2$ are identical or different and denote a hydrogen atom, a halogen atom, a $C_1$-$C_{10}$-alkyl group, a $C_1$-$C_{10}$-alkoxy group, a $C_7$-$C_{20}$-arylalkyl group, a $C_6$-$C_{10}$-aryl group or a $C_6$-$C_{10}$-aryloxy group, $R^1$ and $R^2$ may also be linked to one another and may form a metallocycle together with $M^1$,

$R^3$ denotes a hydrogen atom, a halogen atom, a $C_1$-$C_{10}$-alkyl group, a $C_6$-$C_{10}$-aryl group, a $C_7$-$C_{20}$-arylalkyl group, a $C_1$-$C_{10}$-fluoroalkyl group or an organometallic radical such as $C_1$-$C_{10}$-trialkylsilyl, $C_6$-$C_{10}$-aryl-$C_1$-$C_{10}$-dialkylsilyl, $C_1$-$C_{10}$-alkyl-$C_6$-$C_{10}$-diarylsilyl or $C_6$-$C_{10}$-triarylsilyl,

$R^4$ and $R^5$ are identical or different and denote a $C_2$-$C_{10}$-alkenyl group, a $C_2$-$C_{12}$-alkenylaryl group, a $C_2$-$C_{10}$-alkenoxy group, a $C_2$-$C_8$-alkenyl-$C_1$-$C_8$-dialkylsilyl group, a $C_2$-$C_8$-alkenyl-$C_6$-$C_{10}$-diarylsilyl group or a $C_2$-$C_8$-alkenyl-$C_1$-$C_8$-alkyl-$C_6$-$C_{10}$-arylsilyl group,

$R^6$ and $R^7$ are identical or different and denote a cyclopentadienyl, indenyl or fluorenyl radical, it being possible for the five-membered rings mentioned to form a sandwich structure together with $M^1$,

$R^8$ and $R^9$ are identical or different, are substituents of the five-membered rings $R^6$ and $R^7$ mentioned in the 3-position and denote a $C_2$-$C_{10}$-alkenyl group or an organometallic radical,

$R^{10}$ has the meaning shown in the formulae III-VII

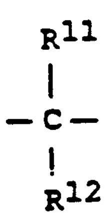

(III)

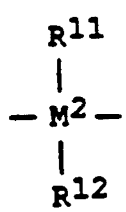

(IV)

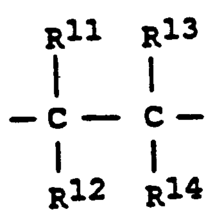

(V)

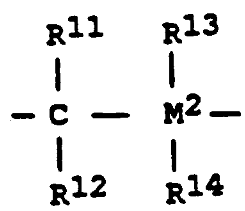

(VI)

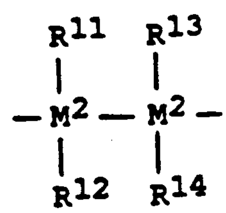

(VII),

where

$M^2$ is silicon, germanium or tin and

$R^{11}$, $R^{12}$, $R^{13}$ and $R^{14}$ are identical or different and denote a hydrogen atom, a halogen atom, a $C_1$-$C_{10}$-alkyl group, a $C_1$-$C_{10}$-fluoroalkyl group, a $C_6$-$C_{10}$-aryl group, a $C_6$-$C_{10}$-fluoroaryl group, a $C_1$-$C_{10}$-alkoxy group, a $C_6$-$C_{10}$-aryloxy group or a $C_7$-$C_{20}$-arylalkyl group,

$R^{11}$ and $R^{12}$, $R^{13}$ and $R^{14}$, $R^{11}$ and $R^{13}$ or $R^{12}$ and $R^{14}$ can form a ring system together with the atoms linking them,

x is zero or 1,

m and n are identical or different and denote a number from zero to 5,

and a poly(methylhydrogensiloxane), which process is carried out at a temperature of 20-90 °C and within 5-120 minutes using a hydrosilylation catalyst.

**2.** The process as claimed in claim 1, wherein the catalyst is a compound of sub-group 8 of the Periodic Table of the Elements.

**3.** The process as claimed in claim 1, wherein the catalyst is $H_2PtCl_6 \cdot 6H_2O$.

**4.** The use of a heterogeneous metallocene catalyst component prepared as claimed in claim 1 together with an aluminoxane for the polymerization of 1-olefins of the formula

$R^{15}$-CH = $CH_2$,

in which

$R^{15}$ denotes a hydrogen atom or a straight-chain or branched alkyl group,

and for the polymerization of cyclic olefins, diolefins and of cyclic diolefins.

**Revendications**

**1.** Procédé pour préparer un constituant catalyseur métallocène hétérogène à partir d'un métallocène de formule I

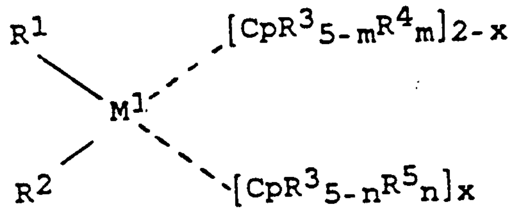

(I)

ou de formule II

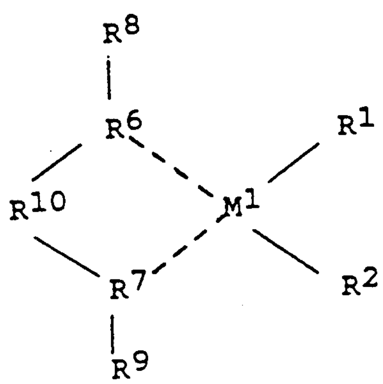

(II),

dans laquelle

$M^1$ est le titane, le zirconium ou le hafnium, et

Cp est un résidu cyclopentadiényle,

$R^1$ et $R^2$ sont identiques ou différents et représentent un atome d'hydrogène, un atome d'halogène, un groupe alkyle en $C_1$-$C_{10}$, un groupe alcoxy en $C_1$-$C_{10}$, un groupe arylakyle en $C_7$-$C_{20}$, un groupe aryle en $C_6$-$C_{10}$ ou un groupe aryloxy en $C_6$-$C_{10}$, $R^1$ et $R^2$ pouvant aussi reliés l'un à l'autre et pouvant former avec $M^1$ un radical métallocyclique,

$R^3$ est un atome d'hydrogène, un atome d'halogène, un groupe alkyle en $C_1$-$C_{10}$, un groupe aryle en $C_6$-$C_{10}$, un groupe arylakyle en $C_7$-$C_{20}$, un groupe fluoralkyle en $C_1$-$C_{10}$ ou un résidu organométalli-

que tel qu'un groupe trialkylsilyle en $C_1$-$C_{10}$, (aryle en $C_6$-$C_{10}$)-di(alkyle en $C_1$-$C_{10}$)silyle, (alkyle en $C_1$-$C_{10}$)-di(aryle en $C_6$-$C_{10}$)-silyle ou triarylsilyle en $C_6$-$C_{10}$,

$R^4$ et $R^5$ sont identiques ou différents et représentent un groupe alcényle en $C_2$-$C_{10}$, un groupe alcénylaryle en $C_2$-$C_{12}$, un groupe alcénoxy en $C_2$-$C_{10}$, un groupe (alcényle en $C_2$-$C_8$)-di(alkyle en $C_1$-$C_8$)silyle, un groupe (alcényle en $C_2$-$C_8$)-di(aryle en $C_6$-$C_{10}$)silyle ou un groupe (alcényle en $C_2$-$C_8$)-(alkyle en $C_1$-$C_8$)-(aryle en $C_6$-$C_{10}$)silyle. $R^4$ et $R^5$ représentent de préférence un groupe alcényle en $C_2$-$C_{10}$ ou un groupe (alcényle en $C_2$-$C_8$)-di(alkyle en $C_1$-$C_8$)silyle,

$R^6$ et $R^7$ sont identiques ou différents et représentent un résidu cyclopentadiényle, indényle ou fluorényle, les cycles à cinq chaînons mentionnés pouvant, avec $M^1$, former une structure sandwich,

$R^8$ et $R^9$ sont identiques ou différents et sont des substituants des noyaux à cinq chaînons $R^6$ et $R^7$ mentionnés ci-dessus, en position 3, et représentent des groupes alcényle en $C_2$-$C_{10}$ ou des résidus organométalliques,

$R^{10}$ a les significations données dans les formules III-VII,

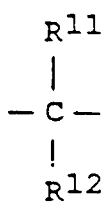
(III)

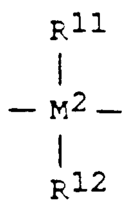
(IV)

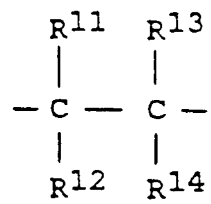
(V)

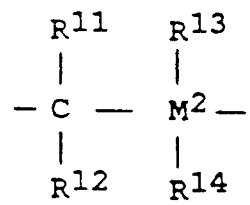
(VI)

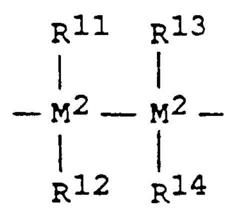
(VII),

où

$M^2$ est le silicium, le germanium ou l'étain, de préférence le silicium, et

$R^{11}$, $R^{12}$, $R^{13}$ et $R^{14}$ sont identiques ou différents et représentent un atome d'hydrogène, un atome d'halogène, un groupe alkyle en $C_1$-$C_{10}$, un groupe fluoralkyle en $C_1$-$C_{10}$, un groupe aryle en $C_6$-$C_{10}$, un groupe fluoraryle en $C_6$-$C_{10}$, un groupe alcoxy en $C_1$-$C_{10}$, un groupe aryloxy en $C_6$-$C_{10}$ ou un groupe arylalkyle en $C_7$-$C_{20}$, $R^{11}$ et $R^{12}$, $R^{13}$ et $R^{14}$, $R^{11}$ et $R^{13}$ ou $R^{12}$ et $R^{14}$ pouvant former avec les atomes qui les relient un système cyclique,

x vaut zéro ou 1,

m et n sont identiques ou différents et représentent un nombre de 0 à 5,

et d'un poly(méthylhydrogénosiloxane), caractérisé en ce que le procédé est mis en oeuvre avec un catalyseur d'hydrosilylation à une température de 20 à 90 °C et pendant 5-120 minutes.

**2.** Procédé selon la revendication 1, caractérisé en ce que le catalyseur est un composé du 8ème groupe secondaire du Tableau Périodique des Eléments.

**3.** Procédé selon la revendication 1, caractérisé en ce que le catalyseur est $H_2PtCl_6.6H_2O$.

**4.** Utilisation du constituant catalyseur métallocène hétérogène préparé selon la revendication 1, avec un aluminoxane, pour la polymérisation de 1-oléfines de formule

$R^{15}$-CH = $CH_2$

dans laquelle $R^{15}$ est un atome d'hydrogène, un groupe alkyle à chaîne droite ou ramifiée, et pour polymériser des oléfines cycliques, des dioléfines et des dioléfines cycliques.